# EUROPEAN PATENT SPECIFICATION

(11) **EP 2 581 167 B1**
(45) Date of publication and mention of the grant of the patent: **13.07.2016**
(21) Application number: 12188361.5
(22) Date of filing: 12.10.2012
(51) Int. Cl.: B23Q 9/00, B27B 9/04

(54) **Guide devices for power tools**
Schienenvorrichtungen für Elektrowerkzeuge
Dispositifs de guidage pour outils électriques

(30) Priority: 13.10.2011 JP 2011226035
(43) Date of publication of application: 17.04.2013
(73) Proprietor: Makita Corporation, Anjo, Aichi 446-8502 (JP)
(72) Inventor: Inayoshi, Hirotomo, Anjo, Aichi 446-8502 (JP)
(74) Representative: Kramer Barske Schmidtchen Patentanwälte PartG mbB

(56) References cited:
- EP-A1- 1 375 060
- DE-A1- 3 612 214
- DE-U1- 9 420 679
- US-A- 3 389 724
- US-A- 4 202 233
- US-A1- 2003 233 926

## Description

The present invention relates to guide devices used for guiding power tools relative to workpieces.

EP1 375 060 A1 discloses a guide rail for a hand tool, according to the preamble of claim 1.

The hand-held power tools, such as portable circular saws and jigsaws, may be used for performing processing operations, such as cutting operations. During the processing operations, the user may hold the power tool with his or her hand and move the power tool relative to a workpiece. It has been known to use an elongated ruler plate when a workpiece is cut by a portable circular saw along a straight line by a relatively long distance. The portable circular saw may include a base for placing on the workpiece, and a tool unit supported on the upper surface of the base. JP-A-2006-334886 teaches a technique relating to this kind of ruler plate. According to the technique disclosed in this document, a guide projection is formed on the upper surface of a ruler plate. The guide projection extends in a longitudinal direction of the ruler plate. On the other hand, a guide groove is formed in the lower surface of a base of a portable circular saw. The guide groove extends in a cut proceeding direction. The portable circular saw may be placed on the ruler plate such that the guide projection of the base engages the guide groove of the ruler plate. In this way, the portable circular saw can be moved accurately along a straight line by a long distance, so that it is possible to accurately cut the workpiece.

However, in the case of the technique disclosed in JP-A-2006-334886, the distance between the guide groove of the base and a cutting blade of the tool unit is fixed to a given value. Therefore, the position of the cutting blade is fixed relative to the ruler plate. For this reason, the ruler plate cannot be used for different portable circular saws that have different specifications or sizes.

In order to solve this problem, JP-A-11-300702 has proposed a guide device including an elongated ruler plate and an adapter. The adapter can support a power tool, such as a portable circular saw or a router, against the ruler plate. By using the guide device, the power tool can be moved accurately along a straight line by a long distance for performing a processing operation, such as a cutting operation, of a workpiece. In addition, it is possible to change the position of the adapter relative to the power tool in order to change the position of the power tool relative to the ruler plate. In this way, the guide device can be used for different power tools having different specifications or sizes. DE3612214 also teaches a guide device similar to that of JP-A-11-300702.

However, the above known guide devices are configured to be used by connecting the power tool only on one side with respect to the process proceeding direction. Therefore, if the power tool to be used has been changed, for example, from a portable circular to a jigsaw, it may not be possible or may be difficult to use the guide device.

Therefore, there has been a need in the art for a guide device that can be broadly applied to different types of power tools.

The invention is defined in claim 1.

Additional objects, features, and advantages, of the present invention will be readily understood after reading the following detailed description together with the claims and the accompanying drawings, in which:
FIG 1 is a plan view of a portable circular saw, as an example of a power tool, which can be used in combination of a guide device according to a representative embodiment;
FIG. 2 is a perspective view of the portable circular saw as viewed from a rear side with respect to a cut proceeding direction;
FIG. 3 is a plan view of a ruler plate of the guide device;
FIG. 4 is a sectional view of the ruler plate taken along line (IV)-(IV) in FIG. 3;
FIG. 5 is a plan view of an adapter base of the guide device;
FIG. 6 is a right side view of the adapter base as viewed in a direction indicated by arrow (VI) in FIG. 5;
FIG. 7 is a sectional view taken along line (VII)-(VII) in FIG. 5 showing first, second and third attaching portions;
FIG. 8 is a plan view of a reference connection member;
FIG. 9 is a rear view of the reference connection member;
FIG. 10 is a plan view of the guide device in the state where the circular saw schematically shown by two-dot chain lines is connected to the guide device;
FIG. 11 is a sectional view taken along line (XI)-(XI) in FIG. 10 showing a fall preventing device of the adapter base;
FIG. 12 is a sectional view taken along line (XII)-(XII) in FIG. 10 showing the first attaching portion of the adapter base;
FIG. 13 is a sectional view taken along line (XIII)-(XIII) in FIG. 10 showing a shifting movement preventing device;
FIG. 14 is a plan view of an auxiliary connection member with indication of a first attaching orientation;
FIG. 15 is a rear view of the auxiliary connection member as viewed from a direction indicated by arrow (XV) in FIG. 14;
FIG. 16 is a plan view of the auxiliary connection member with indication of a second attaching orientation reversed with respect to the longitudinal direction from the first attaching orientation; and
FIG. 17 is a plan view of the guide device showing a jigsaw connected to the left side of the adapter base opposite to the right side where the portable circular saw is connected.

Each of the additional features and teachings disclosed above and below may be utilized separately or in conjunction with other features and teachings to provide improved guide devices for power tools. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful examples of the present teachings. Various examples will now be described with reference to the drawings.

In one embodiment, a guide device may be used for guiding a power tool such that the power tool can move along a substantially straight line in a process proceeding direction relative to a workpiece. The guide device may include a ruler plate capable of being fixed in position relative to the workpiece, an adapter base capable of supporting the power tool and movable in the process proceeding direction relative to the ruler plate, and a connecting device capable of connecting a first power tool on a right side of the adapter base with respect to the process proceeding direction and also capable of connecting a second power tool on a left side of the adapter base opposite to the right side. The first power tool and the second power tool may be configured to be different from each other.

With this arrangement, it is possible to selectively connect the power tool to the left side or the right side of the adapter base according to the type of the power tool to be used. Therefore, the usability of the guide device can be improved, and therefore, it is possible to give an additional value to the guide device.

Preferably, the adapter base may be placed on the ruler plate at a position offset to the right side or the left side from a central line with respect to a width of the ruler plate. The connecting device may connect the first power tool on the right side of the adapter base and may connect the second power tool on the left side of the adapter base.

For example, in the case that the first power tool is a portable circular saw and the second power tool is a jigsaw, although a base of the portable circular saw may have a relatively large size, it is possible to position the base on the right side of the adapter base. Hence, while the distance between the adapter base and a saw blade of the circular saw may be relatively large, it is possible to perform a cutting operation in stable by the portable circular saw without causing substantial shifting movement of the base.

On the other hand, a base of the jigsaw may be relatively small, and therefore, the jigsaw may tend to cause a shifting movement during the operation. However, by positioning the jigsaw, in particular its blade, nearer to the adapter base, it is possible to inhibit or minimize the shifting movement of the jigsaw. Therefore, it is possible to perform a cutting operation in stable by the jigsaw.

In this way, by positioning the adapter base on the ruler plate at a position offset to the right side or the left side from the central line with respect to the width of the ruler plate, it is possible to position the second power tool nearer to the adapter base.

Therefore, in either the case that the first power tool is connected to the right side or the case that the second power tool is connected to the left side, it is perform a processing operation, such as a cutting operation, in stable without causing substantial shifting movement of the power tool.

Preferably, the connecting device may include a first connection member. In this connection, the adapter base may include a first attaching portion. The first connection member can be attached to the first attaching portion at a first position and a second position on the left side of the first position. The first power tool may be connected to the first connection member when the first connection member is attached at the first position. The second power tool may be connected to the first connection member when the first connection member is attached at the second position. In this way, it is possible to selectively connect the first power tool or the second power tool to the adapter base.

Preferably, the connecting device may further include a second connection member. In this connection, the adapter base may further include a second attaching portion. One of the first power tool and the second power tool can be connected to the second connection member. The second attaching portion may include a restriction wall that permits the second connection member to be attached to the second attaching portion from only the left side or the right side.

With this arrangement, it is possible to reliably prevent attachment of the other connection member than the second connection member.

Preferably, the guide device may further include a fall preventing device configured to prevent the adapter base from tilting leftward or rightward relative to the rule plate.

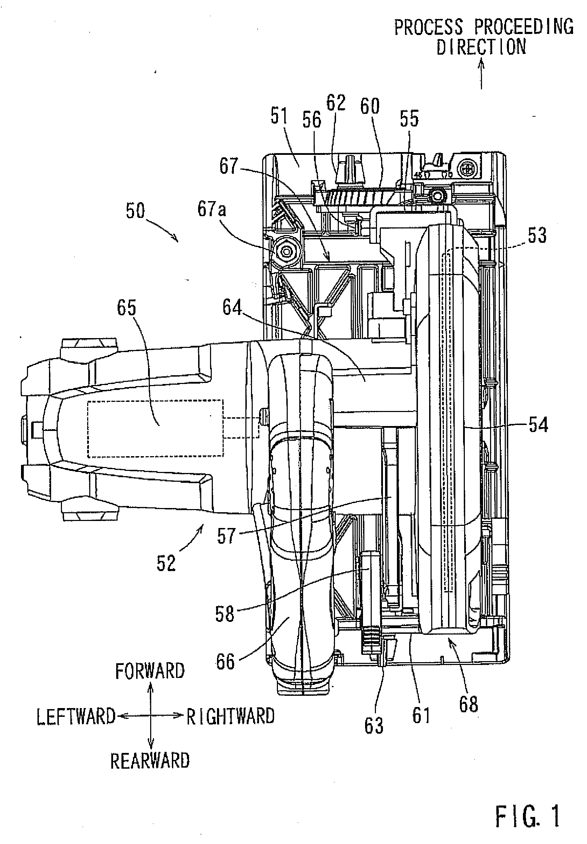

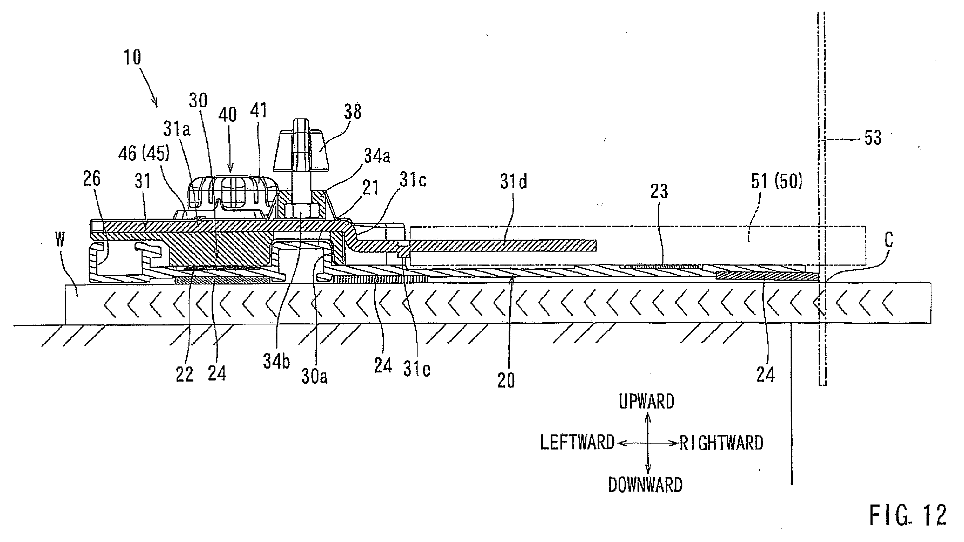

A representative embodiment will now be described with reference to FIGS. 1 to 17. In this embodiment, a cutting tool 50 called a portable circular saw will be exemplified as an example of a power tool. A guide device 10 may be attached to the cutting tool 50, so that the cutting tool 50 can be moved accurately along a substantially straight line by a long distance for performing a cutting operation. The cutting tool 50 will be described in brief.

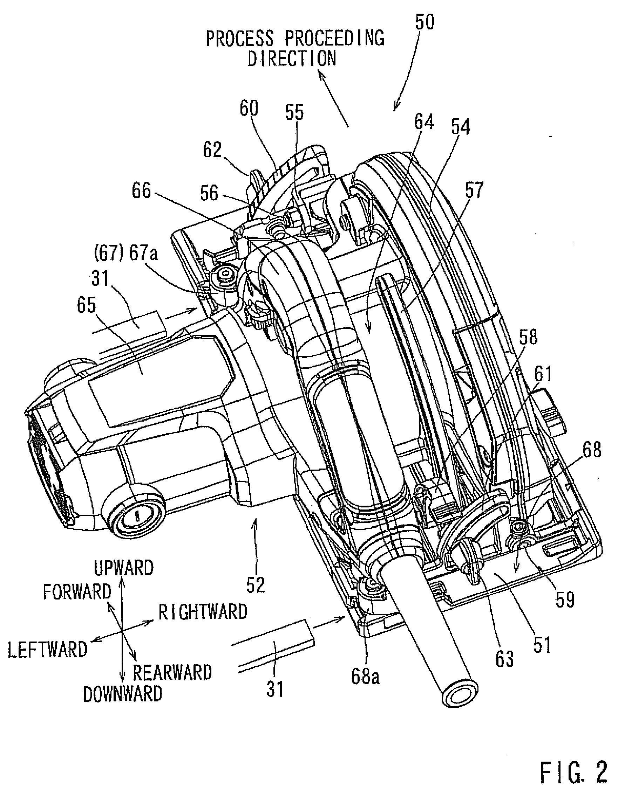

For the purpose of explanation, forward, rearward and rightward directions will be determined with reference to a cut proceeding direction, along which the cutting tool 50 may be moved for performing a cutting operation. In FIGS. 1 and 2, the cutting tool 50 is shown in the state where the cutting tool 50 is detached from the guide device 10.

The cutting tool 50 may include a substantially rectangular base 51 that may be placed on a workpiece W to be cut. A tool unit 52 may be supported on the base 51. The tool unit 52 may include a circular saw blade 53 and a blade case 54. The saw blade 53 serves as a working tool. A blade case 54 may cover substantially upper circumferential half of the peripheral edge of the saw blade 53. The base 51 may support the blade case 54 at two positions, i.e., a front portion and a rear portion of the blade case 54, with respect to the cut proceeding direction.

The front portion with respect to the cut proceeding direction (upper portion as viewed in FIG. 1) of the blade case 54 may be vertically tiltably supported via a vertical pivot shaft 56 of a pivotal support bracket 55.

The base 51 may support the rear portion of the blade case 54 via a depth guide 57. The depth guide 57 may be a guide plate having a strip-like shape curved along an arc. The depth guide 57 may be attached to the base 51 to extend upward along the backside surface (left side surface) of the blade case 54. A fixing lever 58 has a threaded portion that may be engaged with the backside surface of the blade case 54 through the depth guide 57. Therefore, the tool unit 52 can be fixed with respect to the tilt position by tightening the threaded portion of the fixing lever 58 into the backside surface of the blade case 54. With the threaded portion of the fixing lever 58 loosened, the rear portion of the blade case 54 can move vertically under the guide of the depth guide 57, so that the tool unit 52 can pivot vertically via the vertical pivot shaft 56 positioned on the front side. In this way, a protruding distance of the saw blade 53 downwardly from the lower surface of the base 51 can be adjusted. Eventually, a cutting depth of the saw blade 53 into the workpiece W can be adjusted.

Although not shown in the drawings, a movable cover may cover a downwardly protruding portion of the saw blade 53, which protrudes downwardly from the lower surface of the base 51. During the cutting operation, the movable cover may contact an end portion of the workpiece W and may be pushed to be opened by the end portion of the workpiece W as the cutting tool 50 moves in the cut proceeding direction. In this way, the downwardly protruding portion of the saw blade 53 exposed from the movably cover may cut into the workpiece W.

The blade case 54 may be supported by the base 51 so as to be able to tilt laterally (leftward and rightward) via front and rear lateral pivot shafts 59 that are respectively positioned at the front portion and the rear portion of the base 51. In FIG. 2, there is shown the rear lateral pivot shaft 59. A front angular plate 60 and a rear angular plate 61 may be respectively attached to the front portion and the rear portion of the base 51. The front portion of the blade case 54 may be fixed relative to the front angular plate 60 by using a fixing screw 62. Similarly, the rear portion of the blade case 54 may be fixed relative to the rear angular plate 60 by using a fixing screw 63. In this way, by fixing the front portion and the rear portion of the blade case 54 relative to the front angular plate 60 and the rear angular plate 61, respectively, the laterally tilt position of the blade case 54 (and eventually that of the tool unit 52) can be fixed relative to the base 51. With the blade case 54 or the tool unit 52 fixed at a desired laterally tilt position that is inclined relative to the vertical direction about the lateral pivot shafts 59, it is possible to perform a so-called inclined cutting operation.

A reduction gear section 64 may be positioned on the backside of the blade case 54 and may be integrated with the blade case 54. The reduction gear section 64 may have a substantially cylindrical gear case and a reduction gear train (not shown) disposed within the gear case. A drive motor 65 may be coupled to the reduction gear section 64. As shown in FIGS. 1 and 2, the reduction gear section 64 and the drive motor 65 may protrude leftward from the backside of the blade case 54.

A handle 66 may be positioned at a position adjacent to the joint portion between the reduction gear section 64 and the drive motor 65. One hand or both hands of the user may grasp the handle 66. The handle 66 may be configured as a loop-shaped handle and may extend between the upper surface of the reduction gear section 65 and the rear surface of the same with respect to the cut proceeding direction. A trigger-type switch (not shown) may be mounted to the inner circumferential side of the handle 66. The drive motor 65 may be started when the user pushes the switch. The rotation of the drive motor 65 may be transmitted to a spindle (not shown), to which the saw blade 53 is mounted, via the reduction gear train of the reduction gear section 65. In this way, the saw blade 53 may be rotated by the drive motor 65. In this embodiment, the drive motor 65 is an electric motor. However, the drive motor 65 may be replaced with any other drive device, such as an internal combustion engine.

The base 51 may include a front ruler attaching portion 67 and a rear ruler attaching portion 68 that are positioned on the front side and the rear side, respectively, with respect to the cut proceeding direction. The front ruler attaching portion 67 and the rear ruler attaching portion 68 may be configured to be able to attach a parallel ruler (not shown). Each of the ruler attaching portions 67 and 68 may be formed with a groove that extends in a widthwise direction of the base 51. In this embodiment, the widthwise direction of the base 51 is substantially perpendicular to the cut proceeding direction. Therefore, the groove may extend in the left and right direction with respect to the cut proceeding direction. A threaded fixing lever 67a may be threadably engaged with a threaded insertion hole formed in the vertical direction in the ruler attaching portion 67 in communication with the groove. Similarly, a threaded fixing lever 68a may be threadably engaged with a threaded insertion hole formed in the vertical direction in the ruler attaching portion 68. The parallel ruler may have support arms that can be inserted into the grooves of the ruler attaching portions 67 and 68. Therefore, the parallel ruler can be filed to the base 51 by inserting the support arms into the grooves of the ruler attaching portions 67 and 68 and tightening the threaded fixing levers 67a and 68a into the threaded insertion holes until the lower ends of the threaded fixing levers 67a and 68a are pressed against the upper surfaces of the support arms. In this way, the parallel ruler may be attached to the base 51 such that it extends in parallel to the saw blade 53. In order to use the parallel ruler, the parallel ruler may be brought to contact the end surface of the workpiece W. Then, the cutting tool 50 may be moved together with the parallel ruler along the end surface of the workpiece W. Therefore, the cutting operation of the workpiece W can be made with the cut line accurately kept parallel to the end surface of the workpiece W.

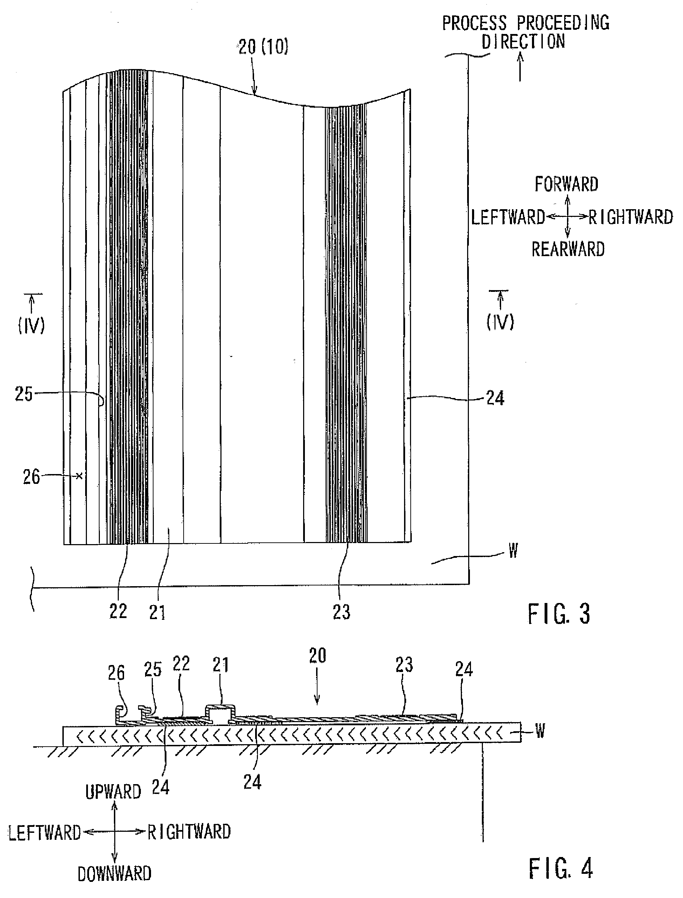

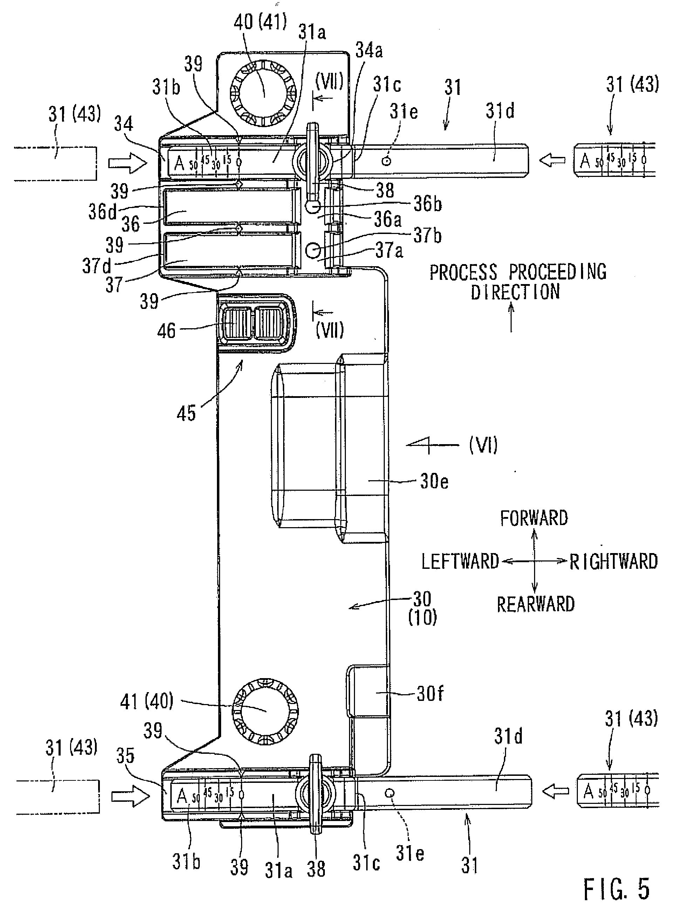

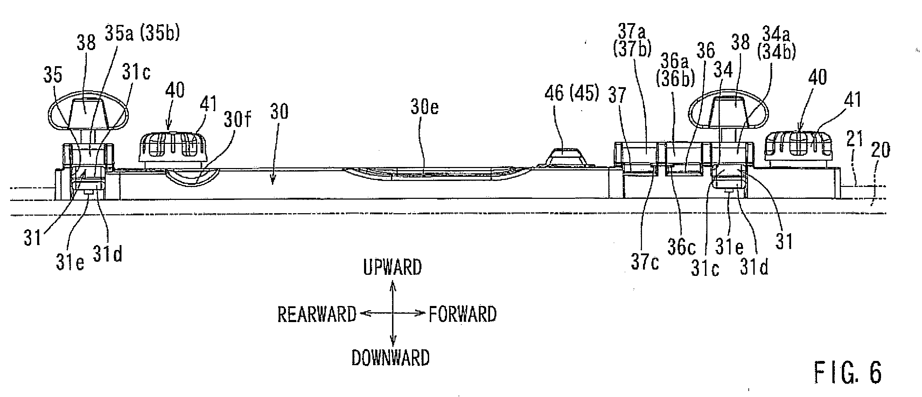

The guide device 10 of this embodiment may be attached to the base 51 and eventually to the cutting tool 50 by utilizing the front and rear ruler attaching portions 67 and 68 of the base 51. The guide device 10 may generally include an elongated ruler plate 20, an adapter base 30, a pair of first connection members 31, and a pair of second connection members 41. The ruler plate 20 may be placed on the upper surface of the workpiece W. The adapter base 30 may be placed on the upper surface of the ruler plate 20 so as to be movable along the cut proceeding direction. The pairs of first and second connection members 31 and 41 may be used for connecting the adapter base 30 to the base 51 of the cutting tool 50. FIGS. 3 and 4 show the ruler plate 20. FIGS. 5 and 6 show the adapter base 30 with the pairs of first and second connection members 31 and 41 attached thereto.

The ruler plate 20 may be a substantially flat plate with an elongated rectangular configuration and may be formed, for example, by a drawing process. A guide projection 21 may be formed on the upper surface of the ruler plate 20 to extend in the longitudinal direction (forward and rearward direction) throughout the length of the ruler plate 20. The guide projection 21 may be positioned to be offset from a central line with respect to the widthwise direction (right and left direction) by a given distance toward the left side edge. A low friction material 22 may be attached to the ruler plate 20 to extend throughout the length of the ruler plate 20 along the left side of the guide projection 21. Similarly, a low friction material 23 may be attached to the ruler plate 20 to extend throughout the length of the ruler plate 20 along the right side of the guide projection 21. The low friction materials 22 and 23 may be chosen to produce a low friction resistance against movement of the base 51. Therefore, the base 51 of the cutting tool 10 can be easily slid along the ruler plate 20 in the longitudinal direction.

In contrast, as shown in FIG. 4, slip-preventing members 24 made of high friction material, such as rubber, may be attached to the lower surface of the ruler plate 20 to extend throughout the length of the ruler plate 20 at thee positions, i.e., on left and right sides of the guide projection 21 and at the right edge of the ruler plate 20. When the ruler plate 20 is placed on the upper surface of the workpiece W, the slip-preventing members 24 may contact the upper surface of the workpiece W. Therefore, it is possible to prevent accidental displacement of the ruler plate 20 during the cutting operation. Eventually, it is possible to ensure a smooth movement of the cutting tool 50. As shown in FIGS. 3 and 4, the slip-preventing member 24 at the right edge of the ruler plate 20 may extend rightward from the right edge by a given distance, so that the right edge of the slip-preventing member 24 extends parallel to the right edge of the ruler plate 20 and is spaced by the given distance therefrom. In this way, the slip-preventing member 24 positioned at the right edge of the ruler plate 20 may be used as a reference plate that indirectly indicates the position of the saw blade 53. An auxiliary groove 26 with an upwardly oriented opening may be formed in the upper surface of the ruler plate 20 throughout the length of the ruler plate 20 along the left side edge. In addition, an engaging groove 25 may be formed in the upper surface of the ruler plate 20 throughout the length of the ruler plate 20 at a position on the right side of the auxiliary groove 26.

The adapter base 30 may be a substantially flat plate with a configuration elongated in the cut proceeding direction. The adapter plate 30 may be placed on the upper surface of the ruler plate 20 so as to be movable along the upper surface of the ruler plate 20. The pair of first connection members 31 may be attached to the front portion and the rear portion of the adapter base 30.

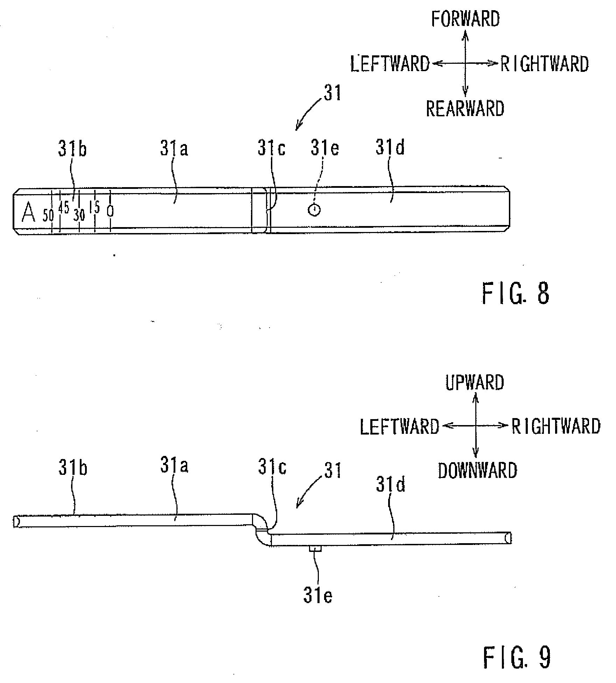

The first connection members 31 may be the same in construction. FIGS. 8 and 9 show one of the first connection members 31. As shown in these figures, the first connection member 31 may be a strip plate having a uniform width and bent into a crank shape at the central portion with respect to the longitudinal direction. The first connection member 31 may include a central bent portion 31 c, a first side portion 31 a and a second side portion 31 d. The first side portion 31 a and the second side portion 31 d are respectively positioned on the left side and the right side of the central bent portion 31 c. The first side portion 31 and the second side portion 31 d may be displaced from each other in the vertical direction by a distance substantially equal to the thickness of the first connection member 31. The upper surface of the first side portion 31 a may have a type A scale 31 b that may be directly marked or printed. The second side portion 31 d may have a stopper projection 31e protruding downward from the lower surface of the second side portion 31d. The first connection members 31 may serve as reference connection members as will be described later.

One of the first connection members 31 may be attached to a front attaching portion 34 that may be provided at a front portion on the upper surface of the adapter 30. The other of the first connection members 31 may be attached to a rear attaching portion 35 that may be provided at a rear portion on the upper surface of the adapter 30. Each of the front attaching portion 34 and the rear attaching portion 35 may extend in the widthwise direction (right and left direction) of the adapter 30. In the attached state, the second side portions 31 d of the first connection members 31 may extend rightward from the corresponding attaching portions 34 and 35.

As shown in FIGS. 5 and 6, two additional attaching portions 36 and 37 may be provided at the front portion on the upper surface of the adapter 30. Therefore, three attaching portions 34, 36 and 37 may be provided at the front portion. These attaching portions 34, 36 and 37 may be arranged adjacent to each other in the forward and rearward direction and may extend parallel to each other. For the purpose of explanation, the front attaching portion 34, the additional attaching portion 36 positioned on the rear side of the front attaching portion 34, and the additional attaching portion 37 positioned on the rear side of the additional attaching portion 36 will be hereinafter also referred to as a first attaching portion 34, a second attaching portion 36 and a third attaching portion 37, respectively. The rear attaching portion 35 provided at the rear portion of the upper surface of the adapter 30 will be hereinafter also referred to as a stationary attaching portion 35.

In this embodiment, the first connection members 31 can be attached to both of the first attaching portion 34 and the stationary attaching portion 35. However, the first connection members 31 cannot be attached to any of the second and third attaching portions 36 and 37. On the other hand, the second connection members 43 can be attached to both of the first attaching portion 34 and the stationary attaching portion 35 and also can be attached to the second and third attaching portions 36 and 37.

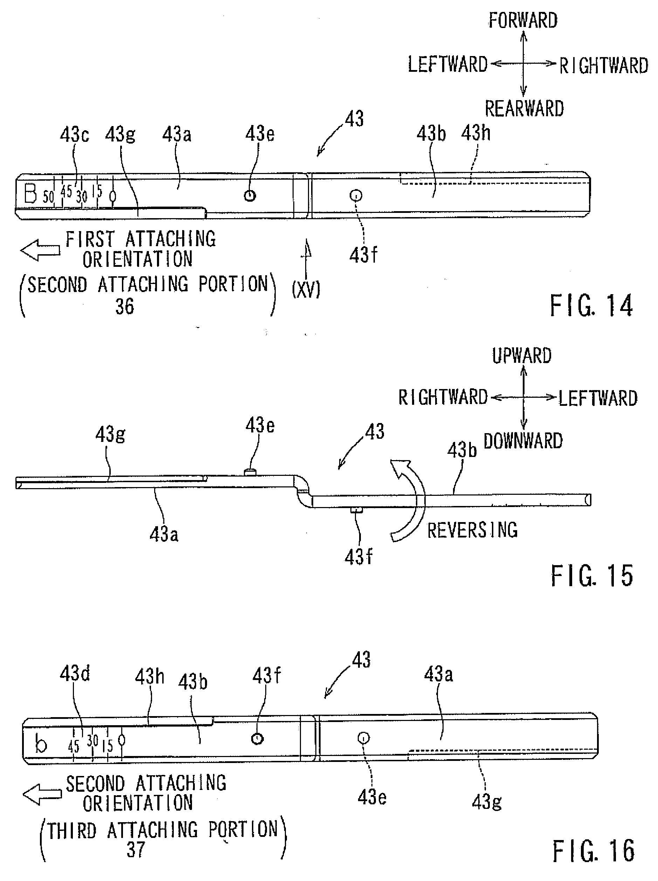

The second connection members 43 may be the same in construction. FIGS. 14 to 16 show one of the second connection members 43. The second connection member 43 can be attached to the third attaching portion 37 positioned on the rear side of the second attaching portion 36 only in the case that the orientation of the second connection member 43 is revered with respect to the longitudinal direction from the orientation for attaching to the second attaching portion 36 (see FIG. 15). In the following explanation, the first connection members 31 will be also referred to as reference connection members 31, and the second connection members 43 will be also referred to as auxiliary connection members 43.

As shown in FIGS. 14 to 16, similar to the reference connection member 31, the auxiliary connection member 43 may be a strip plate having a uniform width and bent into a crank shape at the central portion with respect to the longitudinal direction. The auxiliary connection member 43 may include a first side portion 43a and a second side portion 43b respectively positioned on the left side and the right side of a central bent portion (see FIG. 14). The first side portion 43a and the second side portion 43b may be displaced from each other in the vertical direction by a distance substantially equal to the thickness of the auxiliary connection member 43. The upper surface of the first side portion 43a may have a type B scale 43c that may be directly marked or printed. The lower surface of the second side portion 43b may have a type b scale 43d that may be directly marked or printed. The first side portion 43a may have a stopper projection 43e protruding upwardly from the upper surface of the first side portion 43a. The second side portion 43b may have a stopper projection 43f protruding downward from the lower surface of the second side portion 43b.

As shown in FIG. 14, a first relief recess 43g may be formed along the rear edge of the upper surface of the first side portion 43a and may extend by a given distance in the longitudinal direction. As shown in FIG. 16, a second relief recess 43h may be formed along the front edge of the lower surface of the second side portion 43b and may extend by a given distance in the longitudinal direction.

As indicated by an outline arrow in FIG. 14, the auxiliary connection member 43 can be attached to the adapter base 30 by inserting the first side portion 43a into the second attaching portion 36. In the following explanation, the orientation of the auxiliary connection member 43 taken when inserting the first side portion 43a into the second attaching portion 36 will be referred to as a first attaching orientation. On the other hand, as indicated by an outline arrow in FIG. 16, the orientation of the auxiliary connection member 43 taken when inserting the second side portion 43b into the third attaching portion 37 for attaching the auxiliary connection member 43 to the adapter base 30 will be referred to as a second attaching orientation. The first attaching orientation may be changed to the second attaching orientation by reversing the auxiliary connector member 43 with respect to the longitudinal direction as shown in FIG. 15.

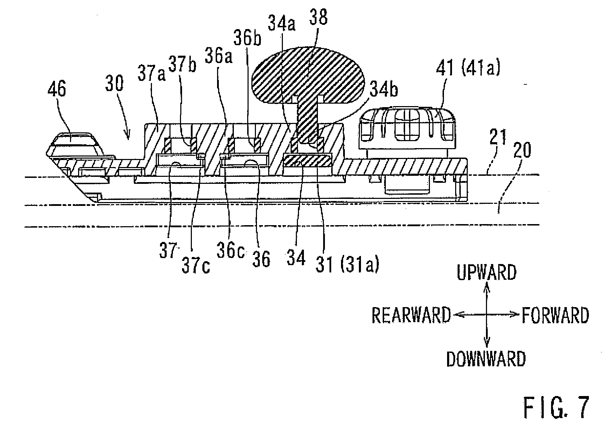

Each of the first attaching portion 34 and the stationary attaching portion 35 may include a groove having a width and a depth that are suitable for receiving the reference connection member 31 and/or the auxiliary connection member 43. Each of the second attaching portion 36 and the third attaching portion 37 may include a groove having a width and a depth that are suitable for receiving the auxiliary connection member 43. Arch-shaped inlet portions 34a, 35a, 36a and 37a may be formed on the upper surface of the adapter base 30 at positions proximal to the right ends of the attaching portions 34, 35, 36 and 37, respectively. As shown in FIG. 7, the inlet portions 34a, 36a and 37a may be formed in series with each other in the forward and rearward direction. Each of the inlet portions 34a, 35a, 36a and 37a may have an upper will extending over the corresponding groove in the widthwise direction. As indicated by solid lines in FIG. 5, the connection member 31 or 43 may be inserted into each of the attaching portions 34, 35, 36 and 37 via the corresponding inlet portion 34a, 35a, 36a or 37a from the right side. Threaded holes 34b, 35b, 36b and 37b may be respectively formed in the upper walls of in the inlet portion 34a, 35a, 36a and 37a. A fixing screw 38 may be engaged with and tightened into each of the threaded holes 34b, 35b, 36b and 37b.

In FIGS. 5 and 6, there is shown a state where two fixing screws 38 are respectively engaged and tightened into the threaded holes 34b of the inlet portion 34a of the first attaching portion 34 and the threaded hole 35b of the inlet portion 35a of the stationary attaching portion 35. No fixing screw 38 engages the threaded hole 36b of the inlet portion 36a of the second attaching portion 36 and the threaded hole 37b of the inlet portion 37a of the third attaching portion 37. Therefore, only the threaded holes 36b and 37b are shown in FIG. 5. The fixing screw 38 can be removed from the inlet portion 34a of the first attaching portion 34 for engaging with the inlet portion 36a of the second attaching portion 36 or the inlet portion 37a of the third attaching portion 37. In this way, one of the two fixing screws 38 may be used for fixing the reference connection member 31 or the auxiliary connection member 43 to the first attaching portion 34 or for fixing the auxiliary connection member 43 to the second attaching portion 36 or the third attaching portion 37. The other of the two fixing members 38 may be used for fixing the reference connection member 31 or the auxiliary connection member 43 to the stationary attaching portion 35.

As shown in FIGS. 6 and 7, the inner wall of the inlet portion 36a of the second attaching portion 36 is formed with a restriction projection 36c that extends into the groove of the second attaching portion 36. Similarly, the inner wall of the inlet portion 37a of the third attaching portion 37 is formed with a restriction projection 37c that extends into the groove of the third attaching portion 37. The restriction projection 36c may be poisoned at the rear upper corner of the groove of the second attaching portion 36. The restriction projection 37c may be positioned at the front upper corner of the groove of the third attaching portion 37.

The reference connection member 31 has no relief recess for avoiding interaction with the restriction projections 36c and 37c. Therefore, the reference connection member 31 may interact with the restriction projections 36c when the reference connection member 31 is moved to be inserted into the second attaching portion 36. Similarly, the reference connection member 31 may interact with the restriction projections 37c when the reference connection member 31 is moved to be inserted into the second attaching portion 37. As a result, the reference connection member 31 cannot be attached to any of the second attaching portion 36 and the third attaching portion 37.

On the other hand, when the auxiliary connection member 43 is moved to be inserted into the second attaching portion 36 while the auxiliary connection member 43 is oriented in the first attaching orientation where the angular scale 43c of the first side portion 43a is oriented upward, the restriction projection 36c may be aligned with the relief recess 43g at the rear upper corner of the groove of the second attaching portion 36. Therefore, the restriction projection 36c may not interfere with the auxiliary connection member 43. Thus, the restriction projection 36c may move along the relief recess 43g. In this way, it is possible to attach the auxiliary connection member 43 to the second attaching portion 36 when the auxiliary connection member 43 is in the first attaching orientation. However, when the auxiliary connection member 43 in the first attaching orientation is moved to be inserted into the third attaching portion 37, the restriction projection 37c positioned at the front upper corner of the groove of the third attaching portion 37 is not aligned with the relief recess 43g. Therefore, the restriction projection 37c may interfere with the movement of the auxiliary connection member 43. In this way, the auxiliary connection member 43 cannot be attached to the third attaching portion 37 when the auxiliary connection member 43 is in the first attaching orientation.

However, when the auxiliary connection member 43 is moved to be inserted into the third attaching portion 37 while the auxiliary connection member 43 is oriented in the second attaching orientation where the auxiliary connection member 43 is reversed with respect to the longitudinal direction such that the angular scale 43d of the second side portion 43b is oriented upward, the restriction projection 37c may be aligned with the relief recess 43h at the front upper corner of the groove of the third attaching portion 37. Therefore, the restriction projection 37c may not interfere with the auxiliary connection member 43. Thus, the restriction projection 37c may move along the relief recess 43h. In this way, it is possible to attach the auxiliary connection member 43 to the third attaching portion 37 when the auxiliary connection member 43 is in the second attaching orientation. On the other hand, when the auxiliary connection member 43 in the second attaching orientation is moved to be inserted into the second attaching portion 36, the restriction projection 36c positioned at the rear upper corner of the groove of the second attaching portion 36 is not aligned with the relief recess 43h. Therefore, the restriction projection 36c may interfere with the movement of the auxiliary connection member 43. In this way, the auxiliary connection member 43 cannot be attached to the second attaching portion 36 when the auxiliary connection member 43 is in the second attaching orientation.

As described above, in this embodiment, the reference connection member 31, the auxiliary connection member 43 in the first attaching orientation, and the auxiliary connection member 43 in the second attaching orientation can be selectively attached to a predetermined one or two of the first, second and third attaching portions 34, 36 and 37. Therefore, it is possible to prevent the connection members 31 and 43 from being improperly attached.

In this embodiment, the auxiliary connection member 43 can be attached to any of the first attaching portion 34 and the stationary attaching portion 35 when the auxiliary connection member 43 is oriented in any of the first and second attaching orientations.

The following table shows the attachability of each of the reference connection member 31, the auxiliary connection member 43 in the first attaching orientation, and the auxiliary connection member 43 in the second attaching orientation to the attaching portions 34, 35, 36 and 37.

| | Reference Connection Member 31 | Auxiliary Connection Member 43 (First Orientation) | Auxiliary Connection Member 43 (Second Orientation) |
|---|---|---|---|
| First Attaching Portion 34 | YES | YES | YES |
| Second Attaching Portion 36 | NO | YES | NO |
| Third Attaching Portion 37 | NO | NO | YES |
| Stationary Attaching Portion 35 | YES | YES | YES |

Each of the attaching portions 34, 35, 36 and 37 may include indicators 39 that can indicate angles on the angular scales 31b (43c and 43d) of the connection member 31 (43).

The reference connection member 31 may be fixed to the first attaching portion 34 by inserting the first side portion 31a into the first attaching portion 34 and tightening the fixing screw 38. Similarly, the auxiliary connection member 43 may be fixed to the first attaching portion 34 by inserting the first side portion 43a or the second side portion 43b into the first attaching portion 34 and tightening the fixing screw 38.

The auxiliary connection member 43 may be fixed to the second attaching portion 36 by inserting the first side portion 43a into the second attaching portion 36 and tightening the fixing screw 38. In addition, the auxiliary connection member 43 may be fixed to the third attaching portion 37 by inserting the second side portion 43b into the third attaching portion 37 and tightening the fixing screw 38.

The reference connection member 31 may be fixed to the stationary attaching portion 35 by inserting the first side portion 31 a into the stationary attaching portion 35 and tightening the fixing screw 38. Similarly, the auxiliary connection member 43 may be fixed to the stationary attaching portion 35 by inserting the first side portion 43a or the second side portion 43b into the stationary attaching portion 35 and tightening the fixing screw 38.

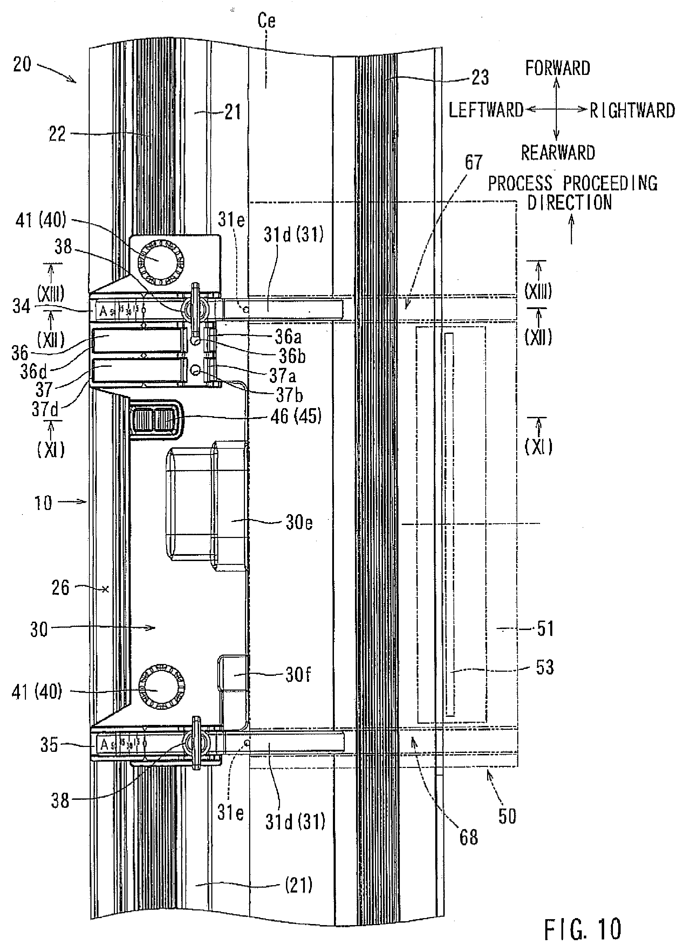

When two reference connection members 31 are respectively attached to be fixed to the first attaching portion 34 and the stationary attaching portion 35 that is positioned on the rear side of the first attaching portion 34, the second side portions 31d of the reference connection members 31 may extend rightward from the adapter base 30. The second side portions 31d extending from the adapter base 30 may be respectively inserted into and fixed to the front ruler attaching portion 67 and the rear ruler attaching portion 68 that are provided on the base 51 for attaching the parallel ruler. In this way, the adapter base 30 can be connected to the left side of the base 51 of the cutting tool 50 as shown in FIGS. 10 to 13.

By removing the reference connection member 31 from the first attaching portion 34 and attaching the auxiliary connection member 43 to the second attaching portion 36 or the third attaching portion 37, it is possible to change the distance between two connection members. To this end, the distances from the stationary attaching portion 35 to the first, second and third attaching portions 34, 36 and 37 may be suitably determined to correspond to different distances between the first ruler attaching portion 67 and second ruler attaching portion 68, which may vary according to specifications or sizes of cutting tools to be applied.

Therefore, according to the distance between the ruler attaching portions 67 and 68 of the cutting tool 50 to be used, the reference connection member 31 or the auxiliary connection member 43 may be attached to the first attaching portion 34, the auxiliary connection member 43 in the first attaching orientation may be attached to the second attaching portion 36, or the auxiliary connection member 43 in the second attaching orientation may be attached to the third attaching portion 37. In this way, the guide device 10 can be attached to three different cutting tools that are different in the distance between the first ruler attaching portion 67 and second ruler attaching portion 68.

FIGS. 10 to 13 show the state where the cutting tool 50 has been placed on the ruler plate 20 via the adapter base 30. In these figures, only the base 51 and the saw blade 53 of the cutting tool 50 are shown by two-dot chain lines. In FIG. 10, two reference connection members 31 are used and are inserted into the ruler attaching portions 67 and 68 from the left side that is opposite to the side from which the parallel ruler is inserted. Therefore, the adapter base 30 is connected to the left side of the base 51 as described previously. The fixing lever 67a of the ruler attaching portion 67 and the fixing lever 68a of the ruler attaching portion 68 may be tightened for fixing the reference connection members 31 to the ruler attaching portions 67 and 68 in order to prevent the reference connection members 31 from being removed. A maximum insertion distance of each of the reference connection members 31 may be limited by the stopper projection 31e that can contact the left edge of the base 51.

As described above, with the guide device 10 of this embodiment, the distance between the connection member positioned on the front side (i.e., the reference connection member 31 or the auxiliary connection member 43 attached to the stationary attaching portion 35) and the connection member positioned on the rear side (i.e., the reference connection member 31 or the auxiliary connection member 43 attached to any one of the attaching portions 34, 36 and 37) can be changed between three different distances according to the distance of the ruler attaching portions 67 and 68. In addition, by changing the attaching position with respect to the left and right direction of each of the connection members 31 and/or 43, it is possible to cope with an inclined cutting operation that is performed with the tool unit 52 inclined relative to the workpiece W.

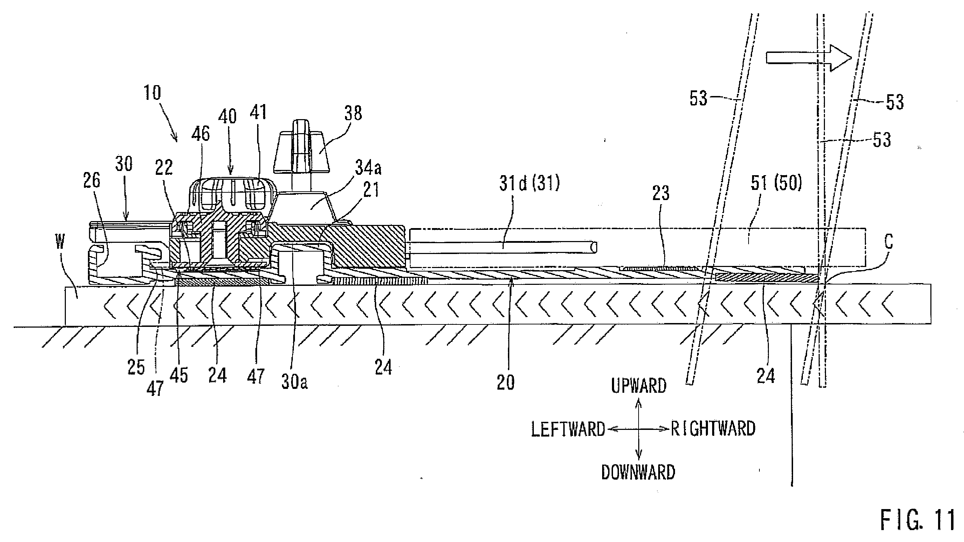

During the cutting operation of the workpiece W by the saw blade 53 of the cutting tool 50, the saw blade 53 may be spaced rightward from the right edge of the ruler plate 20 by a given distance. In FIG. 11, there is shown a cutting position C where the saw blade 53 cuts into the workpiece W.

As shown in FIG. 11, the cutting position C during the cutting operation with the saw blade 53 positioned vertically relative to the workpiece W (vertical cutting operation) may not coincide with the laterally pivoting (tilting) center of the tool unit 52. Therefore, when the tool unit 52 is tilted to the left side, the cutting position C may be shifted to the right side. When the tool unit 52 is tilted to the right side, the cutting position C may be shifted to the left side.

For example, when the tool unit 52 is tilted to the right side by an angle of 30° to cause the lower end of the saw blade 53 to shift leftward, the cutting position C may be shifted leftward as show by the two-dot chain lines in FIG. 11. Therefore, it may be appropriate to tilt the tool unit 52 in the state that the cutting tool 50 on the ruler plate 20 is shifted to the right as indicated by an outline arrow. In this connection, in the case of this embodiment, the first side portion 31 a of the reference connection member 31 has the A type angular scale 31 b. The A-type angular scale 31b includes numerical values (0, 15, 30, 45 and 50) that are determined to correspond to the right tilt angle of the tool unit 52.

Therefore, when an inclined cutting operation is performed with the tool unit 52 inclined rightward by a desired angle selected between 0, 15, 30, 45 and 50 degrees by using two reference connection members 31 attached to the first attaching portion 34 and the stationary attaching portion 35, the position with respect to the right and left direction of one of the reference connection members 31 may be adjusted such that the desired angle value of the angular scale 31b is pointed by the indicators 39 of the first attaching portion 34. Similarly, the position with respect to the right and left direction of the other of the reference connection members 31 may be adjusted such that the desired angle value of the angular scale 31b is pointed by the indicators 39 of the stationary attaching portion 35. With this arrangement, the position of the saw blade 53 may be shifted to the right away from the right edge of the ruler plate 20 as indicated by the outline arrow in FIG. 11. In this way, the inclined cutting operation with the tool unit 52 tilted laterally by the desired angle while the cutting position C by the saw blade 53 is not changed from that of the vertical cutting operation. In this embodiment, the cutting position C may be kept to be the same for inclined cutting operations with the tool unit 52 tilted by angles of 0, 15, 30, 45 and 50 degrees. Here, the inclined operation with the tool unit 52 tilted by an angle of 0 degree corresponds to the vertical cutting operation. Therefore, the cutting operation can be easily rapidly performed with the tool unit 52 tilted laterally by the desired angle.

In the case of the vertical cutting operation, the position of the saw blade 43 with respect to the left and right direction relative to the right edge of the ruler plate 20 can be changed by changing the attaching positions of the reference connection members 31 with respect to the left and right direction relative to the first attaching portion 34 and the stationary attaching portion 35. In this way, it is possible to change the cutting position C of the saw blade 43 into the workpiece W.

More specifically, the attaching positions of the reference connection members 31 with respect to the left and right direction relative to the first attaching portion 34 and the stationary attaching portion 35 can be changed by loosening the fixing screws 38. Thus, by changing the attaching positions of the reference connection members 31 with respect to the left and right direction relative to the first attaching portion 34 and the stationary attaching portion 35, the extending distance of each of the second side portions 31d from the adapter base 30 can be changed. Hence, it is possible to change the position of the adapter base 30 relative to the base 51 of the cutting tool 50.

Also in the case that the auxiliary connection member 43 is attached to the second attaching portion 36 or the third attaching portion 37 in place of attaching the reference connection member 31 to the first attaching portion 31, it is possible to change the attaching position according to the desired tilt angle of the tool unit 52. Thus, the attaching position of the first side portion 43a of the auxiliary connection member 43 with respect to the left and right direction relative to the second attaching portion 36 may be adjusted such that the desired angle value of the B type angular scale 43c is pointed by the indicators 39 of the second attaching portion 36. The attaching position of the second side portion 43b of the auxiliary connection member 43 with respect to the left and right direction relative to the third attaching portion 37 may be adjusted such that the desired angle value of the b type angular scale 43d is pointed by the indicators 39 of the third attaching portion 37.

As shown in FIGS. 11 to 13, a guide groove 30a may be formed in the lower surface of the adapter base 30 to extend throughout the length of the adapter base 30 in the forward ad rearward direction. As shown in these figures, the adapter base 30 may be placed on the ruler plate 20 such that the guide projection 21 of the ruler plate 20 is inserted into the guide groove 30a. Therefore, the adapter plate 30 and eventually the cutting tool 50 connected to the adapter plate 30 can move accurately along a substantially straight line under the guide of the guide projection 21.

The adapter base 30 may slidably contact the low friction material 22 of the ruler plate 20. In addition, the base 51 of the cutting tool 50 may slidably contact the low friction material 23 of the ruler plate 20. Therefore, the adapter base 30 and the cutting tool 50 can smoothly move along a substantially straight line relative to the ruler plate 20. Further, the ruler plate 20 may be placed on the workpiece W while the slip-preventing materials 24 attached to the lower surface of the ruler plate 20 frictionally contact the upper surface of the workpiece W. Therefore, it is possible to prevent accidental displacement of the ruler plate 20 during the cutting operation. Also in this respect, the cutting tool 50 can be smoothly moved along the straight line. As a result, the cutting operation can be easily accurately performed.

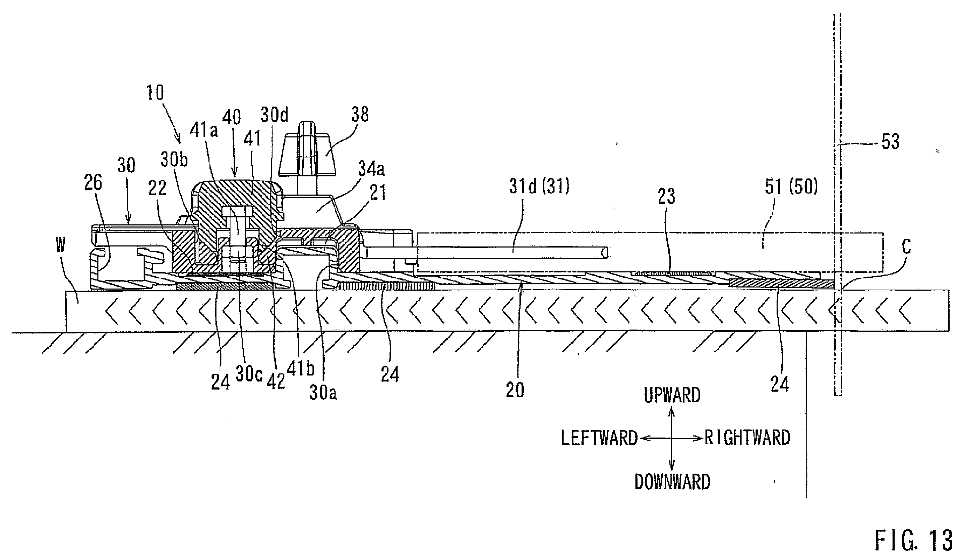

The adapter base 30 may include two shifting movement preventing mechanisms 40 for preventing the adapter base 30 from being accidentally shifted from the ruler plate 20. One of the two shifting movement preventing mechanisms 40 may be positioned at the front portion of the adapter base 30. One of the two shifting movement preventing mechanisms 40 may be positioned at the rear portion of the adapter base 30. These two shifting movement preventing mechanisms 40 may have the same construction. Therefore, the construction of only one of the shifting movement preventing mechanisms 40 will be described. FIG. 13 shows the shifting movement preventing mechanism 40 positioned at the front portion. The shifting movement preventing mechanism 40 may include a dial 41 that can be rotated by the user. A threaded shaft 41 a may be mounted within the lower portion of the dial 41 so as to have the same axis as the rotational axis of the dial 41. The lower portion of the dial 41 is formed with a cylindrical actuation portion 41b located around the lower portion of the threaded shaft 41 a. On the other hand, the adapter base 30 may include a bottomed recess 30b that receives the dial 41. The threaded shaft 41a may engage a threaded hole 30c formed in an upwardly recessed central portion of the bottom of the recess 30b. Therefore, the dial 41 may move upward and downward as the dial 41 rotates. An annular cushioning member 42 having resiliency may be interposed between the actuation portion 41b of the dial 41 and the bottom of the recess 30b. The recess 30b may communicate with the guide groove 30a via a window 30d that is formed in a part of the circumferential wall of the recess 30b.

With this arrangement, when the dial 41 is rotated in a tightening direction of the threaded shaft 41 a, the threaded shaft 41 a moves downward through engagement with the threaded hole 30c, so that the cylindrical actuation portion 41b moves downward. Therefore, the cushioning member 42 may be compressed to be enlarged radially outward. To this end, the lower end of the cylindrical actuation portion 41b and the upper surface of the cushioning member 42 may be tapered in the downward direction, so that these surfaces may serve as cam surfaces for forcing the cushioning member 42 to be enlarged radially outward. As the cushioning member 42 is radially outwardly enlarged, a part of the cushioning member 42 may extend into the guide groove 30a so as to be pressed against the side surface of the guide projection 21 of the ruler plate 20.

In this way, by rotating the dials 41 of the shifting movement preventing mechanisms 40 at the front and the rear portions of the adapter base 30, the cushioning members 42 may be resiliently pressed against the side surface of the guide projection 21. Therefore, it is possible to prevent or inhibit accidental shifting movement of the guide groove 30a relative to the guide projection 21. As a result, it is possible to ensure the movement of the adapter base 30 and the cutting tool 50 along the straight line relative to the ruler plate 21. Changing the amount of rotational operation of each of the dials 41 can adjust the pressing force applied to the ruler plate 20 by the cushioning member 42. In this way, it is possible to adjust the operational force that may be required for moving the cutting tool 50 relative to the ruler plate 20 (i.e., the slide resistance applied to the cutting tool 50).

Referring back to FIG. 5, the adapter base 30 may further include a fall preventing mechanism 45. As shown in FIG. 11, the fall preventing mechanism 45 may include a lock switch 46 that can be moved to slide in the left and right direction by the user. In this embodiment, the lock switch 46 may be slidably movably mounted within the adapter base 30 at a position adjacent the left edge of the adapter base 30. An engaging plate 47 may be fixedly attached to the lower end of the lock switch 46, so that the engaging plate 47 can move in the left and right direction together with the lock switch 46. When the lock switch 46 is slid to the left, the engaging plate 47 also moves to the left, so that a left side portion of the engaging plate 47 extends outward from the left edge of the adapter base 30 and engages the engaging groove 25 that is formed in the upper surface of the ruler plate 20 at a position on the right side of the auxiliary groove 26. In FIG. 11, the left side portion of the engaging plate 47 engaging the engaging groove 25 is shown by two-dot chain lines.

With the fall preventing mechanism 45, when the lock switch 46 is slid leftward in FIGS. 5 and 11, the engaging plate 47 may engage the engaging groove 25 of the ruler plate 20. Therefore, the adapter plate 30 may be prevented from moving upward relative to the ruler plate 20. In this way, the cutting tool 50 can be prevented from tilting rightward. Therefore, the cutting tool 50 can be moved to be slid for a cutting operation while the cutting tool 50 is held in stable without falling to the right.

As shown in FIGS. 5 and 6, relief grooves 30e and 30f may be formed in the upper surface of the adapter base 30 and may extend leftward starting from the right edge of the adapter base 30. With the relief grooves 30e and 30f, it is possible to prevent interference of the drive motor 65, etc., of the cutting tool 50 with the adapter base 30.

As shown in FIG. 5, a restriction wall 36d may be formed at the left end of the second attaching portion 36. Similarly, a restriction wall 37d may be formed at the left end of the third attaching portion 37. Therefore, the auxiliary connection member 43 can be attached to the second attaching portion 36 only via the inlet portion 36a that is positioned proximal to the right end of the second attaching portion 36. Similarly, the auxiliary connection member 43 can be attached to the third attaching portion 37 only via the inlet portion 37a that is positioned proximal to the right end of the third attaching portion 37. In this way, the auxiliary connection member 43 can be attached to the second and third attaching portions 36 and 37 from only their left sides. In contrast, the first attaching portion 34 and the stationary attaching portion 35 have no restriction wall corresponding to the restriction wall 36d or 37d. Therefore, although the reference connection member 31 and the auxiliary connection member 43 can be attached to each of the first attaching portion 34 and the stationary attaching portion 35 via the inlet portions 34a and 35a positioned proximal to the right ends of the attaching portions 34 and 35 as shown by solid lines in FIG. 5, the reference connection member 31 and the auxiliary connection member 43 can be attached to each of the first attaching portion 34 and the stationary attaching portion 35 also from the left side as indicated by two-dot chain lines.

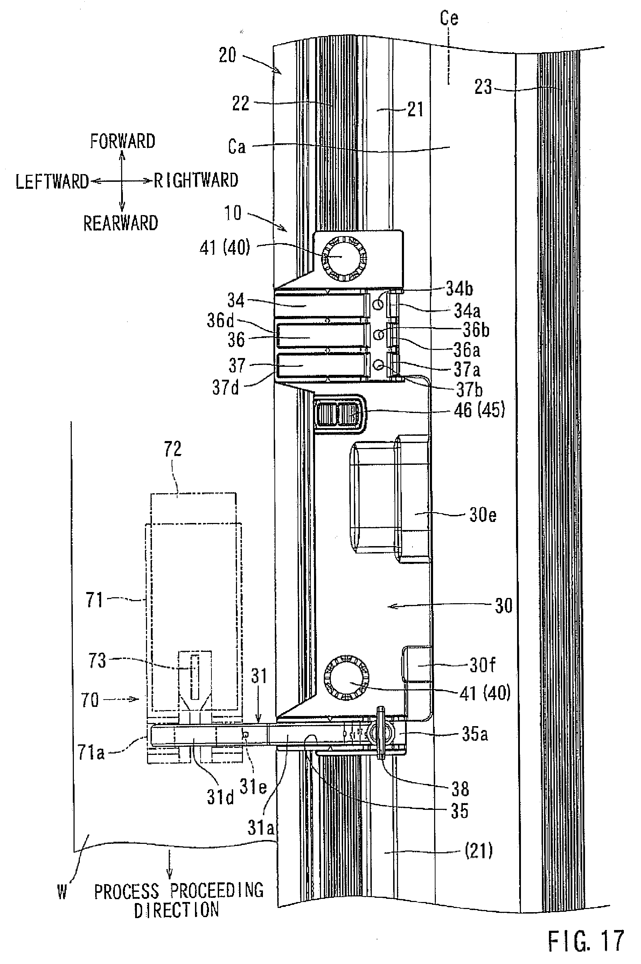

As shown in FIG. 10, the adapter base 30 may be offset leftward from a central line Ce with respect to a widthwise direction of the ruler plate 20, while the left edge of the adapter base 30 is substantially aligned with the left edge of the ruler plate 20 as viewed in a plan view. Therefore, for example, it may be possible to connect another power tool, such as a jigsaw 70, that is different in type from the cutting tool 50 (portable circular saw in this embodiment), on the left side of the adapter base 30. Thus, as shown in FIG. 17, the reference connection member 31 may be attached to the stationary attaching portion 35 by inserting the first side portion 31a of the reference connection member 31 into the stationary attaching portion 35 from the left side. Therefore, the reference connection member 31 may extend leftward from the adapter base 30. Then, the jigsaw 70 may be connected to the reference connection member 31. Because the left edge of the adapter base 30 is substantially aligned with the left edge of the ruler plate 20 as described previously, the jigsaw 70 may be positioned nearer to the adapter base 30 without causing interference with the ruler plate 20. In other words, the jigsaw 70 can cut the workpiece W in the state where a cutting blade 73 of the jigsaw 70 is positioned nearer to the ruler plate 20.

As schematically shown by two-dot chain lines in FIG. 17, the jigsaw 70 may include a substantially rectangular jigsaw base 71 and a jigsaw body 72 supported on the upper surface of the jigsaw base 71. The jigsaw base 71 may contact the upper surface of the workpiece W. The jigsaw body 72 may include an electric motor (not shown). The rotation of the drive motor may be transmitted to the cutting blade 73, so that the cutting blade 73 vertically reciprocally moves for cutting the workpiece W. The jigsaw 70 may include a ruler attaching portion 71 a for attachiing a parallel ruler (not shown). The ruler attaching portion 71 a may be provided at a front portion (with respect to a cut proceeding direction) of the jigsaw base 71. Therefore, in order to connect the guide device 10 to the jigsaw 70, the reference connection member 31 may be attached to the stationary attaching portion 35 by inserting the first side portion 31a from the left side. Then, the second side portion 31d of the reference connection member 31 may be inserted into the ruler attaching portion 71a of the jigsaw base 71 and may then be fixed to the ruler attaching portion 71a by using a fixing screw or the like. In this way, the adapter base 30 may be connected to the jigsaw 70.

In particular, in this embodiment, the guide projection 21 of the ruler plate 20 is positioned leftward of the central line Ce with respect to the width direction, and the adapter base 30 is placed on the ruler plate 20 so as to be movable along the left edge of the ruler plate 20. Therefore, in the case that the jigsaw 70 has a relatively small size and may tend to cause displacement during the operation, connecting the jigsaw 70 to the left side of the adapter base 30 enables the cutting blade 73 of the jigsaw 70 to cut the workpiece W at a position nearer to the adapter base 30. In this way, the jigsaw 70 having a relatively small size can cut the workpiece W while the jigsaw 70 is held in stable without causing substantial displacement.

As described above, with the guide device 10 of this embodiment, the base 51 of the cutting tool 50 may be connected to the right side of the adapter base 30 via two reference connection members 31, and the cutting tool 50 may be supported on the ruler plate 20 via the adapter base 30. On the other hand, the jigsaw 70 can be connected to the left side of the adapter base 30 by removing the reference connection members 31 and by attaching one of the reference connection members 31 to the stationary attaching portion 35 from the left side. In this way, it is possible to connect the power tool to the left side of the adapter base 30 in addition to or in place of the right side thereof. Therefore, the guide device 10 is improved in the usability or versatility, so that an additional value can be given to the guide device 10.

In the case of the above embodiment, it is possible to connect the power tool 50 (portable circular saw) to the right side of the adapter base 30 so as to be positioned above the ruler plate 20 by attaching the reference connection members 31 to the first attaching portion 34 and the stationary attaching portion 35 from the right side via the respective inlet portions 34a and 35a, or by attaching the auxiliary connection members 43 to the second and third attaching portions 36 and 37 in the first attaching orientation and the second attaching orientation, respectively. On the other hand, the reference connection member 31 or the auxiliary connection member 43 may be attached to the first attaching portion 34 or the stationary attaching portion 35 from the left side, because each of the first attaching portion 34 and the stationary attaching portion 35 does not have a restriction wall. In this way, it is possible to connect the jigsaw 70 to the left side of the adapter base 30 at a position directly above the workpiece W.

In addition, the adapter base 30 of the guide device 10 of this embodiment is paced on the ruler plate 20 such that the adapter base 30 is offset leftward from the central line Ce with respect to the widthwise direction of the ruler plate 20, while the left edge of the adapter base 30 is substantially aligned with the left edge of the ruler plate 20 as viewed in a plan view. Therefore, although the base 51 of the power tool (portable circular saw) 50 may have a relatively large size, it is possible to position the base 51 on the right side of the adapter base 30. Hence, while the distance between the adapter base 30 and the saw blade 53 may be relatively large, it is possible to perform a cutting operation in stable by the power tool (portable circular saw) 50 without causing substantial shifting movement of the base 51.

Further, because the left edge of the adapter base 30 is substantially aligned with the left edge of the ruler plate 20, it is possible to position the jigsaw 70 nearer to the left edge of the adapter base 30. The base 71 of the jigsaw 70 may be relatively small, and therefore, the jigsaw 70 may tend to cause a shifting movement during the operation. However, by positioning the jigsaw 70, in particular its blade 73, nearer to the adapter base 30, it is possible to inhibit or minimize the shifting movement of the jigsaw 70. In this way, it is possible to perform a cutting operation in stable by the jigsaw 70.

Furthermore, because the restriction walls 36d and 37d are formed at the left ends of the second and third attaching portions 36 and 37, the auxiliary connection member 43 cannot be attached to the second and third attaching portions 36 and 37 from the left side. Therefore, it is possible to reliably prevent improper attaching of the auxiliary connection member 43.

The above embodiment may be modified in various ways. For example, although three attaching portions, i.e., the first, second and third attaching portions 34, 36 and 37, are provided at the front portion of the adapter base 30 for attaching the connection member 31 or 43 in the above embodiment, it may be possible to provide two or four or more attaching portions.

In addition, although only one stationary attaching portion 35 is provided at the rear portion of the adapter base 30, it may be possible to provide two or more attaching portions at the rear portion. For example, it may be also possible to provide only one attaching portion at the front portion and to provide two or more attaching portions at the rear portion for providing different distances between the front and rear connection members.

Further, it may be possible to configure the front attaching portion and the rear attaching portion such that both or one of them can move in the forward and rearward direction relative to the adapter base 30, so that the distance between the front attaching portion and the rear attaching portion can be adjusted. In this way, same connection members can be used commonly for different power tools having different specifications or sizes.

Furthermore, although the same auxiliary connection member 43 is used for both of the second attaching portion 36 and the third attaching portion 37 by reversing the auxiliary connection member 43 with respect to the longitudinal direction, it may be possible to use two different connection members having relief recesses at different positions from each other. In this way, one of the two different connection members may be used exclusively for the second attaching portion 36, and the other of the two different connection members may be used exclusively for the third attaching portion 37.

Furthermore, in the above embodiment, the restriction projection 36c at the inlet portion 36 of the second attaching portion 36 is positioned at the rear upper corner of the groove, and the restriction projection 37c at the inlet portion 37 of the second attaching portion 37 is positioned at the front upper corner of the groove. Thus, the position of the restriction projection 36c relative to the corresponding groove and the position of the restriction projection 37c relative to the corresponding grove are different from each other. However, the position of the restriction projection 36c relative to the corresponding groove and the position of the restriction projection 37c relative to the corresponding grove may be the same. In such a case, the restriction projections 36c and the restriction projection 37c may have different shapes or sizes. Also with this arrangement, it is possible to prevent improper attaching of the reference connection member or the auxiliary connection member.

Furthermore, although the restriction walls 36d and 37d are respectively formed at the left ends of the second attaching portion 36 and the third attaching portion 37 for preventing the reference connection member 31 and the auxiliary connection member 43 from being attached from the left side, the restriction walls 36d and 37d may be replaced with projections projecting into the grooves of the attaching portions.

Furthermore, although the guide device 10 is configured to enable the jigsaw 70 to be connected on the left side of the adapter base 30 such that the cutting direction of the jigsaw 70 is the rearward direction, it may be possible to connect the jigsaw 70 such that the cutting direction is the forward direction.

Furthermore, although the jigsaw 70 is connected to the adapter base 30 by utilizing the stationary attaching portion 35, it may be possible to utilize the first attaching portion 34. In such a case, the reference connection member 31 or the auxiliary connection member 43 may be attached to the first attaching portion 34 so as to extend leftward from the adapter base 30. Then, the jigsaw 70 may be connected to the reference connection member 31 or the auxiliary connection member 43.

Furthermore, although the portable circular saw (cutting tool 50) and the jigsaw 70 were disclosed as examples of power tools for use with the guide device 10, the guide device 10 may be used for any other power tools, such as a router and a trimmer used for chamfering or grooving workpieces.

## Claims

1. A guide device (10) used for guiding a power tool (50, 70) such that the power tool (50, 70) can move along a substantially straight line in a process proceeding direction relative to a workpiece (W), comprising
a ruler plate (20) capable of being fixed in position relative to the workpiece (W);
an adapter base (30) capable of supporting the power tool (50, 70) and movable in the process proceeding direction relative to the ruler plate (20), and
a connecting device (31, 43) capable of connecting a first power tool (50) on a right side of the adapter base (30) with respect to the process proceeding direction and also capable of connecting a second power tool (70) on a left side of the adapter base (30) opposite to the right side,
wherein
the connecting device includes a first connection member (31),
the adapter base (30) includes a first attaching portion (35),
the first connection member (31) can be attached to the first attaching portion (35) at a first position and a second position on the left side of the first position,
the first power tool (50) is connected to the first connection member (31) when the first connection member is attached at the first position, and
the second power tool (70) is connected to the first connection member (31) when the first connection member is attached at the second position,
**characterized in that**
the connecting device further includes a second connection member (31, 43),
the adapter base (30) further includes a second attaching portion (34, 36, 37), and
one of the first power tool (50) and the second power tool (70) can be connected to the second connection member.

2. The guide device (10) according to claim 1, wherein the first power tool (50) and the second power tool (70) are configured to be different from each other.

3. The guide device (10) according to claim 1 or 2, wherein
the adapter base (30) is placed on the ruler plate (20) at a position offset to the right side or the left side from a central line (Ce) with respect to a width of the ruler plate (20).

4. The guide device according to any one of claims 1 to 3, wherein the second attaching portion (36, 37) includes a restriction wall (36c, 37c) that permits the second connection member (31, 43) to be attached to the second attaching portion from only the left side or the right side.

5. The guide device (10) according to any one of the preceding claims, further comprising a fall preventing device (45) configured to prevent the adapter base (30) from tilting leftward or rightward relative to the ruler plate (20).

6. The guide device (10) according to any one of the preceding claims, wherein the first power tool is a portable circular saw (50), and the second power tool is a jigsaw (70).

## Patentansprüche

1. Führungsvorrichtung (10), die zum Führen eines Kraftwerkzeugs (50, 70) verwendet wird, so dass sich das Kraftwerkzeug (50, 70) entlang einer im Wesentlichen geraden Linie in einer Arbeitsfortschrittsrichtung relativ zu einem Werkstück (W) bewegen kann, mit
einer Linealplatte (20), die in einer Position relativ zu dem Werkstück (W) fixiert werden kann,
einer Adapterbasis (30), die das Kraftwerkzeug (50, 70) lagern kann und in der Arbeitsfortschrittsrichtung relativ zu der Linealplatte (20) bewegbar ist, und
einer Verbindungsvorrichtung (41, 43), die ein erstes Kraftwerkzeug (50) auf einer rechten Seite der Adapterbasis (30) in Bezug auf die Arbeitsfortschrittsrichtung verbinden kann und ebenso ein zweites Kraftwerkzeug (70) auf einer der rechten Seite gegenüberliegenden linken Seite der Adapterbasis (30) verbinden kann,
bei der
die Verbindungsvorrichtung ein erstes Verbindungsbauteil (31) enthält,
die Adapterbasis (30) einen ersten Anbringungsteil (35) enthält,
das erste Verbindungsbauteil (31) an den ersten Anbringungsteil (35) in einer ersten Position und einer zweiten Position an der linken Seite der ersten Position angebracht werden kann,
das erste Kraftwerkzeug (50) mit dem ersten Verbindungsbauteil (31) verbunden ist, wenn das erste Verbindungsteil in der ersten Position angebracht ist, und
das zweite Kraftwerkzeug (70) mit dem ersten Verbindungsbauteil (31) verbunden ist, wenn das erste Verbindungsbauteil in der zweiten Position angebracht ist,
**dadurch gekennzeichnet, dass**
die Verbindungsvorrichtung weiter ein zweites Verbindungsbauteil (31, 43) enthält,
die Adapterbasis (30) weiter einen zweiten Anbringungsteil (34, 36, 37) enthält, und
eines von dem ersten Kraftwerkzeug (50) und dem zweiten Kraftwerkzeug (70) mit dem zweiten Verbindungsbauteil verbunden werden kann.

2. Führungsvorrichtung (10) nach Anspruch 1, bei der das erste Kraftwerkzeug (50) und das zweite Kraftwerkzeug (70) dazu konfiguriert sind, dass sie unterschiedlich voneinander sind.

3. Führungsvorrichtung (10) nach Anspruch 1 oder 2, bei der
die Adapterbasis (30) auf der Linealplatte (20) in einer Position versetzt zu der rechten Seite oder zu der linken Seite von einer Mittellinie (Ce) aus in Bezug auf eine Breite der Linealplatte (20) platziert ist.

4. Führungsvorrichtung nach einem der Ansprüche 1 bis 3, bei der der zweite Anbringungsteil (36, 37) eine Einschränkungswand (36c, 37c) enthält, die es dem zweiten Verbindungsbauteil (31, 43) erlaubt, an den zweiten Anbringungsteil nur von der linken Seite oder der rechten Seite aus angebracht zu werden.

5. Führungsvorrichtung (10) nach einem der vorhergehenden Ansprüche, die weiter eine Herausfallverhinderungsvorrichtung (45) aufweist, die dazu konfiguriert ist, die Adapterbasis an einem Neigen nach links oder nach rechts relativ zu der Linealplatte (20) zu hindern.

6. Führungsvorrichtung (10) nach einem der vorhergehenden Ansprüche, bei der das erste Kraftwerkzeug eine tragbare Kreissäge (50) ist und das zweite Kraftwerkzeug eine Stichsäge (70) ist.

## Revendications

1. Dispositif de guidage (10) utilisé pour guider un outil électrique (50, 70) de telle sorte que l'outil électrique (50, 70) peut se déplacer le long d'une ligne sensiblement rectiligne dans une direction d'avancement de processus par rapport à une pièce (W), comprenant
une plaque-règle (20) capable d'être fixée dans une position par rapport à la pièce (W) ;
une base d'adaptation (30) capable de supporter l'outil électrique (50, 70) et mobile dans la direction d'avancement de processus par rapport à la plaque-règle (20), et
un dispositif de liaison (31, 43) capable de relier un premier outil électrique (50) sur un côté droit de la base d'adaptation (30) par rapport à la direction d'avancement de processus et également capable de relier un second outil électrique (70) sur un côté gauche de la base d'adaptation (30) à l'opposé du côté droit, dans lequel
le dispositif de liaison inclut un premier élément de liaison (31),
la base d'adaptation (30) inclut une première partie de fixation (35),
le premier élément de liaison (31) peut être fixé à la première partie de fixation (35) dans une première position et une seconde position sur le côté gauche de la première position,
le premier outil électrique (50) est relié au premier élément de liaison (31) quand le premier élément de liaison est fixé dans la première position, et
le second outil électrique (70) est relié au premier élément de liaison (31) quand le premier élément de liaison est fixé dans la seconde position,
**caractérisé en ce que**
le dispositif de liaison inclut en outre un second élément de liaison (31,43),
la base d'adaptation (30) inclut en outre une seconde partie de fixation (34, 36, 37), et
l'un des premier outil électrique (50) et second outil électrique (70) peut être relié au second élément de liaison.

2. Dispositif de guidage (10) selon la revendication 1, dans lequel le premier outil électrique (50) et le second outil électrique (70) sont configurés pour être différents l'un de l'autre.

3. Dispositif de guidage (10) selon la revendication 1 ou 2, dans lequel
la base d'adaptation est placée sur la plaque-règle (20) dans une position décalée vers le côté droit ou le côté gauche à partir d'une ligne centrale (Ce) par rapport à une largeur de la plaque-règle (20).

4. Dispositif de guidage selon l'une quelconque des revendications 1 à 3, dans lequel la seconde partie de fixation (36, 37) inclut une paroi de restriction (36c, 37c) qui permet au second élément de liaison (31, 43) d'être fixé à la seconde partie de fixation uniquement depuis le côté gauche ou depuis le côté droit.

5. Dispositif de guidage (10) selon l'une quelconque des revendications précédentes, comprenant en outre un dispositif antichute (45) configuré pour empêcher la base d'adaptation (30) de s'incliner vers la gauche ou vers la droite par rapport à la plaque-règle (20).

6. Dispositif de guidage (10) selon l'une quelconque des revendications précédentes, dans lequel le premier outil électrique est une scie circulaire portative (50) et le second outil électrique est une scie sauteuse (70).
